# EUROPÄISCHE PATENTSCHRIFT

(11) **EP 3 227 650 B1**
(45) Veröffentlichungstag und Bekanntmachung des Hinweises auf die Patenterteilung: **18.05.2022**
(21) Anmeldenummer: 15817087.8
(22) Anmeldetag: 01.12.2015
(51) Int. Cl.: G01J 3/52, G01J 3/10

(54) **VERFAHREN ZUR KALIBRIERUNG EINES SPEKTRALRADIOMETERS**
METHOD FOR CALIBRATING A SPECTRORADIOMETER
PROCÉDÉ D'ÉTALONNAGE D'UN SPECTRORADIOMÈTRE

(30) Priorität: 01.12.2014 DE 102014117595
(43) Veröffentlichungstag der Anmeldung: 11.10.2017
(73) Patentinhaber: Instrument Systems Optische Messtechnik GmbH, 81677 München (DE)
(72) Erfinder: FRANK, Felix, 81667 München (DE); YOUNG, Richard, Kenton Middlesex Ha3 8JU (GB); KRAFT, Juliane, 76359 Marxzell (DE); HÄRING, Reto, 81369 München (DE)
(74) Vertreter: Isfort, Olaf
(86) Internationale Anmeldenummer: PCT/EP2015/078129
(87) Internationale Veröffentlichungsnummer: WO 2016/087402

(56) Entgegenhaltungen:
- EP-A1- 1 314 972
- EP-A1- 1 694 049
- WO-A1-00/03213
- WO-A1-2014/011729
- WO-A1-2014/123522
- WO-A2-2008/137169
- DE-A1-102008 033 544
- JP-A- 2004 177 147
- JP-A- 2014 081 275
- Ein Leitfaden ET AL: "Grundlagen zur Norm ISO/IEC 17025 und deren Implementierung", , 3. September 2009 (2009-09-03), XP055264198, Gefunden im Internet: URL:https://www.agilent.com/cs/library/pri mers/Public/5990-4540DEE.pdf [gefunden am 2016-04-11]

## Beschreibung

Die Erfindung betrifft ein Verfahren zur Kalibrierung eines Spektralradiometers, mit den folgenden Verfahrensschritten:
- Aufnahme von Lichtmessdaten durch Vermessung der Strahlung wenigstens einer Normallichtquelle mittels des zu kalibrierenden Spektralradiometers,
- Ableitung von Kalibrierdaten aus den Lichtmessdaten durch Vergleich der aufgenommenen Lichtmessdaten mit bekannten Daten der Normallichtquelle, und
- Kalibrierung des Spektralradiometers gemäß den Kalibrierdaten, wobei
- die Normallichtquelle spätestens nach Ablauf eines vorgegebenen Zeitintervalls auf Grundlage einer oder mehrerer Standardlichtquellen kalibriert wird.

Spektralradiometer sind Geräte zur Vermessung des Spektrums von Lichtquellen, zum Beispiel im sichtbaren Spektralbereich, wobei aus der gemessenen spektralen Intensitätsverteilung farbmetrische und photometrische Größen abgeleitet werden. Spektralradiometer werden zur Charakterisierung und Kalibrierung von Lichtquellen für verschiedenste Anwendungen eingesetzt. Typischerweise umfasst ein Spektralradiometer ein optisches Spektrometer zur Vermessung des optischen Spektrums. Das Spektrometer liefert dabei digitale Messdaten in Form der Strahlungsintensität als Funktion der Wellenlänge. Diese Messdaten werden mittels einer Recheneinheit des Spektralradiometers in farbmetrische (z.B. Farbkoordinaten x, y, z) und/oder photometrische beziehungsweise radiometrische (zum Beispiel Lichtstrom) Größen umgerechnet.

Spektralradiometer werden zum Beispiel in Produktionsstätten von Leuchtdioden eingesetzt, um die Leuchtdioden hinsichtlich ihrer farbmetrischen und photometrischen Größen zu vermessen und entsprechend zu klassieren. Ebenso kommen Spektralradiometer in Produktionsstätten von Displays (z.B. für LCD-Flachbildschirme) zum Einsatz, zur Vermessung der Helligkeit, der Leuchtdichte, der Farbe usw. In solchen Produktionsstätten arbeiten üblicherweise viele Spektralradiometer parallel. Um eine gleichmäßige Qualität der Produkte sicherzustellen, ist der Gleichlauf der parallel arbeitenden Spektralradiometer von entscheidender Bedeutung. Gleichlauf bedeutet dabei, dass die parallel arbeitenden Spektralradiometer bei Messobjekten, die ein identisches Strahlungsspektrum aufweisen, im Wesentlichen identische Lichtmessdaten (spektrale Intensitätsverteilung, farbmetrische und photometrische Größen) liefern. Zu diesem Zweck müssen die Spektralradiometer regelmäßig kalibriert werden. Man unterscheidet dabei zwischen einer grundlegenden Kalibrierung, die in vergleichsweise großen Zeitabständen durchgeführt wird, und einer häufiger durchgeführten Kalibrierung, die man auch als Korrektur bezeichnen kann, wobei im Rahmen dieser Korrektur aufgrund von Driften auftretende eher geringfügige systematische Messfehler kompensiert werden.

Aus der WO 2014/011729 A1 ist ein Verfahren zur Kalibrierung von Farbmessgeräten, d.h. zur Erzielung eines Gleichlaufs mehrerer Farbmessgeräte bekannt, bei dem die zu kalibrierenden Farbmessgeräte mit einem standardisierten Farbmessgerät abgeglichen werden. Dazu wird ein Prüfling (typischerweise ein Farbmuster unter wohl definierter Beleuchtung und Beobachtungsgeometrie) sowohl mit den zu kalibrierenden Farbmessgeräten als auch mit dem standardisierten Farbmessgerät vermessen. Aus dem Vergleich der so gewonnenen Lichtmessdaten werden Kalibrierdaten abgeleitet, auf deren Basis die Farbmessgeräte kalibriert werden.

Zwar stellt das vorbekannte Verfahren einen Gleichlauf der parallel eingesetzten Geräte sicher. Nachteilig ist jedoch, dass die Qualität der Kalibrierung mit der Kalibrierung des standardisierten Gerätes steht und fällt. Ist die Kalibrierung des standardisierten Gerätes nicht korrekt, wird dieser Fehler auf sämtliche Geräte übertragen. Nachteilig ist insbesondere, dass der Gleichlauf nur an einem Standort sichergestellt werden kann, nämlich dort, wo sich das standardisierte Gerät befindet. Häufig ist jedoch die Produktion, z.B. von Leuchtdioden oder Displays, über mehrere Produktionsstandorte verteilt, so dass auch der Gleichlauf der an den verschiedenen Produktionsstandorten parallel im Einsatz befindlichen Geräte sichergestellt werden muss.

Die WO 2008/137169 A2 beschreibt ein System zur radiometrischen Kalibrierung von Spektroskopie-Ausrüstungen. Ein Referenzspektrograph wird auf einen lokalen Primärstandard kalibriert (eine kalibrierte Lichtquelle mit bekannten spektralen Intensitäten, die auf einen Referenzstandard rückführbar ist). Andere Spektrographen werden dann nicht mittels des lokalen primären Kalibrierungsstandards, sondern mittels des Referenzspektrographen kalibriert. Dies wird erreicht, indem eine Lichtquelle sowohl mit dem Referenzspektrographen als auch mit dem zu kalibrierenden Spektrographen vermessen wird.

Vor diesem Hintergrund ist es Aufgabe der Erfindung, ein zuverlässiges und praktikables Verfahren zur Kalibrierung eines Spektralradiometers bereitzustellen. Insbesondere soll auf einfache und zuverlässige Weise ein Gleichlauf von an verschiedenen Standorten befindlichen Spektralradiometern hergestellt werden können.

Diese Aufgabe löst die Erfindung ausgehend von einem Verfahren der eingangs genannten Art dadurch, dass die Gültigkeit, d.h. die Verwendbarkeit der Normallichtquelle für die Kalibrierung überprüft wird, indem
- die Lichtmessdaten der Normallichtquelle mit Lichtmessdaten einer oder mehrerer weiterer Normallichtquellen gleichen Typs verglichen werden, wobei die Gültigkeit der Normallichtquelle festgestellt wird, falls die Abweichungen der Lichtmessdaten der Normallichtquellen unterhalb vorgegebener Grenzwerte liegen, und und wobei anderenfalls die Kalibrierung der Normallichtquelle früher, d.h. vor Ablauf des vorgegebenen Zeitintervalls erfolgt.

Gemäß der Erfindung wird also zur Kalibrierung des Spektralradiometers ein Kalibriernormal verwendet, das zwei oder mehr Geräte umfasst, nämlich, zwei oder mehr (vorzugsweise drei) Normallichtquellen gleichen Typs, deren Lichtmessdaten miteinander verglichen werden, um auf diese Weise eine Konsistenzprüfung zur Feststellung der Gültigkeit der jeweils zur Kalibrierung des Spektralradiometers verwendeten Normallichtquelle sicherzustellen. Eine Veränderung oder vorzeitige Alterung eines einzelnen Gerätes kann somit sicher erkannt werden. Falls bei dem Vergleich der Lichtmessdaten der Normallichtquellen eine oberhalb eines vorgegebenen Grenzwertes liegende Abweichung festgestellt wird, bedeutet dies, dass jedenfalls eine der Normallichtquellen eine Alterung oder eine sonstige Veränderung ihrer Eigenschaften erfahren hat, sodass die Normallichtquellen nicht für die Kalibrierung des Spektralradiometers verwendet werden können, anderenfalls wäre die Kalibrierung des jeweiligen Spektralradiometers entsprechend den Veränderungen der Normallichtquelle fehlerhaft. Ergibt der Vergleich der Lichtmessdaten der Normallichtquellen eine Abweichung oberhalb des vorgegebenen Grenzwertes, müssen zunächst sämtliche Normallichtquellen grundlegend rekalibriert werden, möglichst in der Weise, dass die Kalibrierung auf einen nationalen Standard rückführbar ist. Zur Konsistenzprüfung, d.h. zum Vergleich der Lichtmessdaten der Normallichtquellen kann ein Spektralradiometer oder auch ein Farbmessgerät verwendet werden. Ergänzend kann das erfindungsgemäß eingesetzte Kalibriernormal zwei oder mehrere (vorzugsweise drei) Spektralradiometer (hier zur Unterscheidung von dem zu kalibrierenden Spektralradiometer als Normalspektralradiometer bezeichnet) umfassen. Mittels der Normalspektralradiometer kann festgestellt werden, ob die Lichtmessdaten der Normallichtquelle mit den Solldaten, d.h. mit den bekannten Daten der Normallichtquelle übereinstimmen. Mit anderen Worten wird durch die Vermessung der Normallichtquelle mit den Normalspektralradiometern festgestellt, ob das Spektrum der Normallichtquelle noch der Kalibrierung der Normallichtquelle entspricht oder ob sich das Spektrum verändert hat. Ein Kriterium für die Gültigkeit der Normallichtquelle ist insofern die Übereinstimmung der mittels der Normalspektralradiometer aufgenommenen Lichtmessdaten mit den Solldaten der Normallichtquelle. Ein weiteres Kriterium ist, dass die mit den verschiedenen Normalspektralradiometern des Kalibriernormals aufgenommenen Lichtmessdaten im Wesentlichen übereinstimmen, d.h. dass die Abweichungen der mittels der verschiedenen Normalspektralradiometer aufgenommenen Lichtmessdaten voneinander unterhalb vorgegebener Grenzwerte liegen. Hierdurch wird wiederum eine Konsistenzprüfung verwirklicht, um zu vermeiden, dass sich eine fehlerhafte Kalibrierung eines zur Überprüfung der Normallichtquelle verwendeten Normalspektralradiometers auf die Kalibrierung des Spektralradiometers überträgt. Wird eine solche Abweichung festgestellt, müssen die Normalspektralradiometer und ggf. auch die Normallichtquelle rekalibriert werden, möglichst mit Rückführbarkeit auf einen nationalen Standard.

Ein Vorteil des erfindungsgemäßen Verfahrens ist, dass sich dadurch nicht nur ein Gleichlauf der an einem Standort befindlichen Spektralradiometer zuverlässig sicherstellen lässt, sondern es ist auf einfache und praktikable Weise auch möglich, den Gleichlauf von vielen an verschiedenen Standorten befindlichen Spektralradiometern sicherzustellen, indem die am jeweiligen Standort befindlichen Kalibriernormale (Mehrzahl von Normallichtquellen, Mehrzahl von Normalspektralradiometern) regelmäßig oder bei Feststellung von Abweichungen rekalibriert werden, und zwar mit Rückführbarkeit auf einen nationalen Standard.

Wesentlicher Aspekt der Erfindung ist somit, anders ausgedrückt, die Verwendung eines lokalen Kalibriernormals zur Kalibrierung der am jeweiligen Standort befindlichen Spektralradiometer, in Kombination mit der Kalibrierung der lokalen Kalibriernormale auf Basis eines einheitlichen, vorzugsweise nationalen Standards. Dadurch wird der Gleichlauf sämtlicher an verschiedenen Standorten befindlicher Spektralradiometer sichergestellt.

Bei dem erfindungsgemäßen Verfahren werden die Normallichtquellen des Kalibriernormals spätestens nach Ablauf eines vorgegebenen Zeitintervalls auf Grundlage einer oder mehrerer Standardlichtquellen kalibriert. Die Kalibrierung erfolgt früher, sofern die zuvor beschriebene Konsistenzprüfung Abweichungen oberhalb der vorgegebenen Grenzwerte ergibt. Als Standardlichtquellen eignen sich zum Beispiel Linienlampen an sich bekannter Art, wie zum Beispiel Argon-Lampen oder Quecksilberdampflampen, oder auch Laser, wie zum Beispiel Helium-Neon-Laser, mit Spektrallinien bei bekannten und wohldefinierten Wellenlängen entsprechend den jeweiligen atomaren Übergängen für die Kalibrierung der Wellenlängenskala. Für die Kalibrierung der spektralen Geräteempfindlichkeit eignen sich andere Lichtquellen, die bei definierten Betriebsparametern ein bekanntes Emissionsspektrum aufweisen, wie zum Beispiel Halogenlampen. Die Kalibrierung der spektralen Geräteempfindlichkeit kann auf absoluter Skala (z.B. Lumen / nm) erfolgen, wenn die Lichtquelle und Messanordnung dafür geeignet gewählt werden. Eine weitere Möglichkeit zur Realisierung einer Kalibrierlichtquelle bieten Leuchtdioden, wobei sich solche Lichtquellen für eine grundlegende Kalibrierung eher weniger eignen durch die geringe Leuchtkraft in den Randbereichen des sichtbaren Spektrums. Die verwendeten Standardlichtquellen werden zweckmäßig regelmäßig in einem nationalen Prüflabor (in Deutschland zum Beispiel die Physikalisch Technische Bundesanstalt in Braunschweig, PTB) geprüft und gegebenenfalls rekalibriert, um auf diese Weise die Rückführbarkeit auf einen nationalen Standard sicherzustellen. Die genannten Standardlichtquellen eignen sich zur Durchführung des erfindungsgemäßen Verfahrens besonders gut, da diese ohne weiteres transportabel sind und an den verschiedenen Standorten verwendet werden können, um dort jeweils das Kalibriernormal bei Bedarf bzw. periodisch zu kalibrieren.

Um den Gleichlauf sämtlicher an verschiedenen Standorten befindlicher Spektralradiometer sicherzustellen, sollten demnach die an einem Standort befindlichen Spektralradiometer auf dieselbe Weise, d.h. unter Verwendung derselben Normallichtquellen bzw. derselben Normalspektralradiometer im Sinne der Erfindung kalibriert werden.

Außerdem sollten die an verschiedenen Standorten befindlichen lokalen Kalibriernormale, d.h. die Normallichtquellen bzw. Normalspektralradiometer, auf dieselbe Weise, d.h. wenn möglich auf Basis derselben Standardlichtquellen kalibriert werden. Demnach wird gemäß der Erfindung der Gleichlauf der an einem Standort befindlichen Spektralradiometer in der Zeit zwischen den auf Basis der Standardlichtquellen erfolgenden Kalibrierung durch Verwendung der lokalen Kalibriernormale sichergestellt. Während der Kalibrierzyklen auftretende Abweichungen werden aufgrund der oben beschriebenen Konsistenzprüfung festgestellt, sodass bei Bedarf vorzeitig eine neue Kalibrierung initiiert werden kann.

Gemäß einem weiteren Aspekt der Erfindung wird als Normallichtquelle eine weißes Licht emittierende Leuchtdiode verwendet, die ein Strahlung eines ersten Wellenlängenbereichs emittierendes Halbleiterelement und wenigstens einen Leuchtstoff aufweist, der einen Teil der Strahlung des ersten Wellenlängenbereichs in Strahlung eines zweiten Wellenlängenbereichs umwandelt.

Weißes Licht emittierende Leuchtdioden, die nur ein einziges Halbleiterelement aufweisen, das in einem ersten Wellenlängenbereich emittiert, sind aus dem Stand der Technik bekannt. Meist liegt der erste Wellenlängenbereich im blauen Spektralbereich. Die blaue Strahlung wird mittels eines oder mehrerer Leuchtstoffe zum Teil in Strahlung eines zweiten (dritten, vierten, etc.) Wellenlängenbereichs umgewandelt, wobei die Mischstrahlung aus der Strahlung im ersten Wellenlängenbereich und der Strahlung im zweiten (dritten, vierten, etc.) Wellenlängenbereich weißes Licht ergibt. Bekannt sind beispielsweise weiße Leuchtdioden, bei denen ein im blauen Spektralbereich emittierendes Halbleiterelement in Kombination mit einem im gelben Spektralbereich emittierenden Leuchtstoff zum Einsatz kommt. Ebenso bekannt sind weiße Leuchtdioden, bei denen das im blauen Spektralbereich emittierende Halbleiterelement mit Leuchtstoffen kombiniert wird, die im grünen und roten Spektralbereich emittieren, so dass wiederum das resultierende Mischlicht einen weißen Farbeindruck ergibt.

Die weiße Leuchtdiode sollte zur Verwendung als Normallichtquelle gemäß der Erfindung bei stabilisierter Temperatur und stabilisiertem Strom, der durch das Halbleiterelement fließt, betrieben werden. Auf diese Weise ist ein wohldefiniertes und reproduzierbares Spektrum des abgestrahlten Lichtes sichergestellt. Zweckmäßigerweise umfasst die Normallichtquelle eine Regeleinrichtung, die die Betriebsparameter der Leuchtdiode auf konstante Werte regelt.

Die Verwendung einer Normallichtquelle auf Basis einer weißen Leuchtdiode hat den Vorteil, dass sich eine entsprechende Normallichtquelle besonders kompakt, stabil, transportfähig, kostengünstig und mit langen Rekalibrierzyklen realisieren lässt. Aufgrund des weißen Emissionsspektrums ist die Normallichtquelle universell einsetzbar. Die Kalibrierung wirkt auf das gesamte sichtbare Spektrum. Die Kalibrierung ist damit gültig für die mittels des Spektralradiometers gemessenen photometrischen und farbmetrischen Größen.

Bei einer bevorzugten Ausgestaltung des erfindungsgemäßen Verfahrens umfasst die Kalibrierung des Spektralradiometers die Korrektur der Wellenlängenskala des Spektrometers des jeweiligen Spektralradiometers, in der Weise, dass die Lagen von spektralen Extrema des gemessenen Spektrums mit den Lagen von spektralen Extrema des bekannten Spektrums der Normallichtquelle im Wesentlichen übereinstimmen. Das Spektrum der weißen Leuchtdiode weist wohldefinierte spektrale Extrema (insbesondere ein ausgeprägtes Maximum im blauen Spektralbereich) auf, so dass die Korrektur der Wellenlängenskala zuverlässig und mit hoher Genauigkeit erfolgen kann.

Ergänzend oder alternativ kann die Kalibrierung eine wellenlängenabhängige Korrektur der spektralen Empfindlichkeit umfassen, in der Weise, dass der wellenlängenabhängige Intensitätsverlauf des korrigierten gemessenen Spektrums mit demjenigen des bekannten Spektrums der Normallichtquelle im Wesentlichen übereinstimmt. Wie zuvor erwähnt, weist die weiße Leuchtdiode ein wohldefiniertes Spektrum auf, das zur zuverlässigen und genauen Kalibrierung nicht nur der Wellenlängenskala, sondern auch der spektralen Empfindlichkeit des Spektrometers des jeweiligen Spektralradiometers verwendet werden kann. Zweckmäßigerweise erfolgt in einem ersten Schritt die Korrektur der Wellenlängenskala, und in einem zweiten Schritt die Kalibrierung der spektralen Empfindlichkeit. Die Kalibrierung der spektralen Empfindlichkeit kann nach der Kalibrierung der Wellenlängenskala einfach durch Vergleich des wellenlängenabhängigen Intensitätsverlaufs des gemessenen Spektrums mit demjenigen des bekannten Spektrums der Normallichtquelle und durch entsprechende wellenlängenabhängige Korrektur erfolgen. Alternativ können auf Basis eines Modells Parameter bestimmt werden, die den Intensitätsverlauf möglichst genau wiedergeben. Dies hat den Vorteil, dass Rauschbeiträge im Messsignal eliminiert werden können und dass das Modell in Spektralbereiche extrapoliert werden kann, wo keine brauchbaren Messresultate vorliegen, aufgrund eines begrenzten Emissionsspektrums der Normallichtquelle.

Ausführungsbeispiele der Erfindung werden im Folgenden anhand der Zeichnungen näher erläutert. Es zeigen:
- Figur 1:: schematische Ansicht eines Spektralradiometers mit Normallichtquelle;
- Figur 2:: Darstellung des erfindungsgemäßen Verfahrens als Blockdiagramm;
- Figur 3:: Illustration der Kalibrierung auf Basis einer weißen Leuchtdiode als Normallichtquelle.

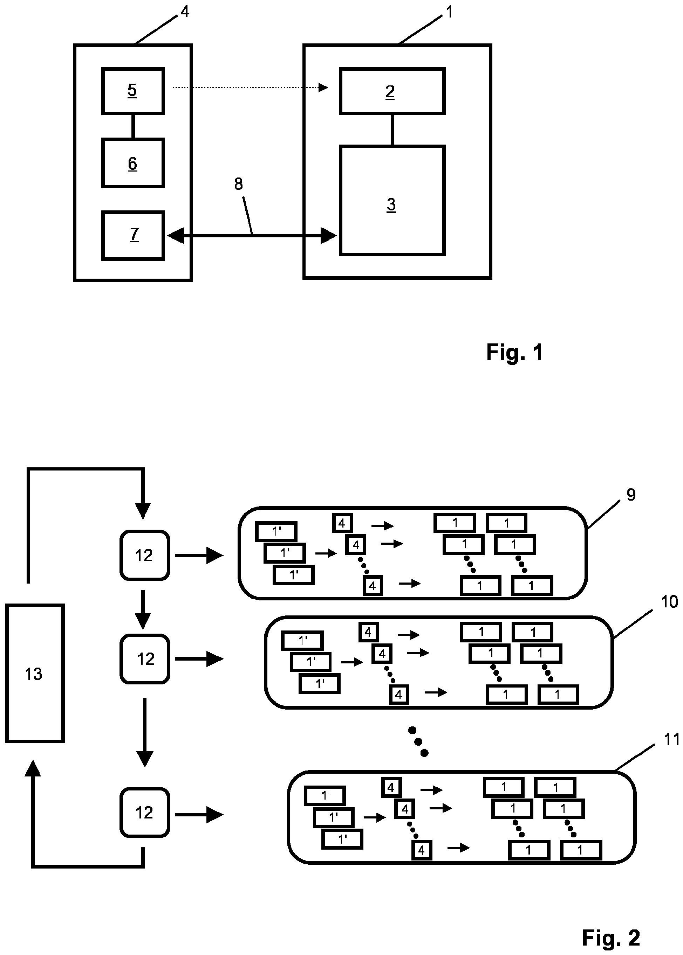

Die Figur 1 zeigt schematisch ein Spektralradiometer 1, das ein optisches Spektrometer 2 und eine damit verbundene Recheneinheit 3 umfasst. Das optische Spektrometer 2 vermisst das Spektrum einer Lichtquelle und liefert den wellenlängenabhängigen Intensitätsverlauf in digitaler Form. Diese Messdaten werden an die Recheneinheit 3 übergeben. Beispielsweise umfasst das Spektrometer 2 ein dispersives Element (typischerweise ein Gitter), das die spektralen Anteile der vermessenen Strahlung räumlich separiert, und ein CCD-Element mit einer Mehrzahl von lichtempfindlichen Pixeln, wobei jedem Pixel aufgrund der räumlichen Anordnung ein bestimmtes Wellenlängenintervall zugeordnet ist. Die Recheneinheit 3 wertet das in digitaler Form vorliegende Spektrum aus und berechnet daraus photometrische und/oder farbmetrische Größen, wie zum Beispiel die Farbkoordinaten x, y, z.

Zur Kalibrierung des Spektralradiometers 1 kommt erfindungsgemäß eine Normallichtquelle 4 zum Einsatz. Diese umfasst ein lichtemittierendes Element 5, zum Beispiel eine Leuchtdiode, die mit einer Regeleinrichtung 6 verbunden ist. Die Regeleinrichtung 6 versorgt das lichtemittierende Element 5 mit Energie und regelt dessen Betriebsparameter, wie Strom, Spannung und Temperatur, auf vorgegebene konstante Werte. Auf diese Weise wird sichergestellt, dass das lichtemittierende Element 5 ein wohldefiniertes, bekanntes Emissionsspektrum aufweist.

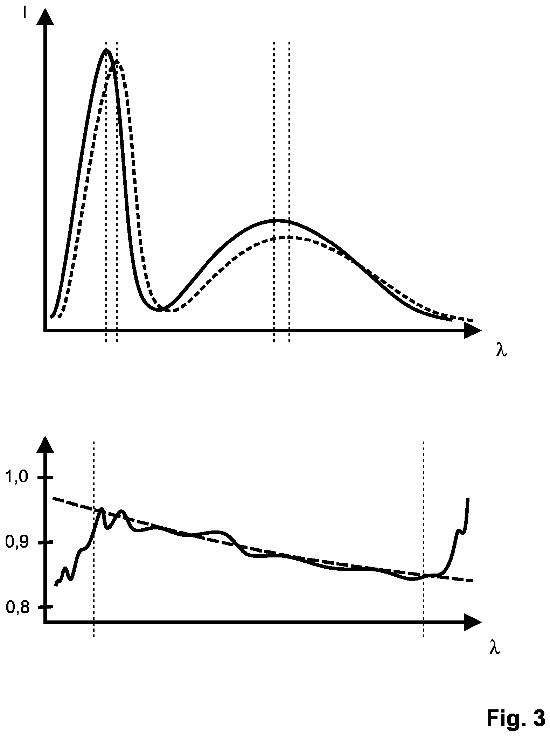

In dem dargestellten Ausführungsbeispiel werden mittels des Spektralradiometers 1 zum Zwecke der Kalibrierung desselben Lichtmessdaten durch Vermessung der Strahlung der Normallichtquelle 4 aufgenommen. Die Normallichtquelle 4 weist einen Datenspeicher 7 auf, in dem die bekannten Daten der Normallichtquelle 4 gespeichert sind, zum Beispiel in Form des Emissionsspektrums und/oder photometrischer und/oder farbmetrischer Daten. Über eine Datenverbindung 8 liest das Spektralradiometer 1 diese Daten aus. Die Recheneinheit 3 vergleicht die aufgenommenen Lichtmessdaten mit den ausgelesenen bekannten Daten der Normallichtquelle 4 und leitet daraus Kalibrierdaten ab. Schließlich erfolgt die Kalibrierung des Spektralradiometers 1 gemäß den Kalibrierdaten. Die Kalibrierung erfolgt dabei mittels geeigneter Korrekturalgorithmen, die durch die Recheneinheit 3 auf die Lichtmessdaten angewendet werden. Es können zum Beispiel direkt die photometrischen oder farbmetrischen Endresultate (zum Beispiel die Farbkoordinaten) korrigiert werden. Ergibt der Vergleich der von der Normallichtquelle 4 aufgenommenen Lichtmessdaten mit den bekannten Daten der Normallichtquelle 4 zum Beispiel eine Abweichung einer Farbkoordinate um einen Differenzwert, so ändert der Korrekturalgorithmus bei nachfolgenden Messungen diese Farbkoordinate entsprechend dem Differenzwert. Entsprechendes gilt für photometrische Größen, wie zum Beispiel den Lichtstrom, die Leuchtdichte usw. Alternativ kann das gemessene Spektrum korrigiert werden, d.h. bevor die photometrischen und/oder farbmetrischen Größen aus dem Spektrum abgeleitet werden. Hierzu kann eine Korrektur der Wellenlängenskala sowie einer Korrektur der spektralen Empfindlichkeit wellenlängenabhängig angewendet werden. Dies wird weiter unten unter Bezugnahme auf die Figur 3 näher erläutert.

Die Figur 2 illustriert das erfindungsgemäße Verfahren zur Kalibrierung einer Vielzahl von Spektralradiometern 1, die sich an verschiedenen, d.h. voneinander entfernten Standorten 9, 10, 11 befinden. Bei den Standorten 9, 10, 11 kann es sich zum Beispiel um Produktionsstandorte von Leuchtdioden oder Displays handeln. An jedem der Standorte 9, 10, 11 kommt jeweils ein lokales Kalibriernormal zum Einsatz, das drei Normalspektralradiometer 1' sowie eine Mehrzahl von Normallichtquellen 4 umfasst. Jedes der Spektralradiometer 1 wird, wie oben unter Bezugnahme auf die Figur 1 beschrieben, unter Verwendung einer der Normallichtquellen 4 kalibriert. Vor der Kalibrierung der Spektralradiometer 1 wird jeweils die Gültigkeit, d.h. die Verwendbarkeit der Normallichtquelle 4 für die Kalibrierung überprüft, indem jede Normallichtquelle 4 mittels der am jeweiligen Standort 9, 10, 11 befindlichen drei Normalspektralradiometer 1' vermessen wird, wobei die Gültigkeit der betreffenden Normallichtquelle 4 festgestellt wird, falls die Abweichungen der im Wege dieser Konsistenzprüfung aufgenommenen Lichtmessdaten voneinander unterhalb vorgegebener Grenzwerte liegen. Außerdem ist Voraussetzung für die Feststellung der Gültigkeit der Normallichtquelle 4, dass die mittels der Normalspektralradiometer 1' aufgenommenen Lichtmessdaten von den Solldaten, d.h. von den bekannten Daten der jeweiligen Normallichtquelle 4 weniger als vorgegebene Grenzwerte abweichen. Die zulässigen Abweichungen betragen typischerweise weniger als 5%, bevorzugt weniger als 1% vom Sollwert. Die Prüfung der Gültigkeit auf Basis der jeweils drei Normalspektralradiometer 1' an jedem Standort 9, 10, 11 stellt sicher, dass die durch die Normalspektralradiometer 1' vorgegebene Basis der Kalibrierung korrekt ist. Ergibt die Konsistenzprüfung eine Abweichung, lässt dies darauf schließen, dass eines der Spektralradiometer 1' nicht mehr verlässlich arbeitet. Die festgestellte Abweichung wird zum Anlass genommen, alle Normalspektralradiometer 1' des jeweiligen lokalen Kalibriernormals neu zu kalibrieren. Die Verwendung von wenigstens drei Normalspektralradiometern 1' hat dabei den Vorteil, dass die bei der Konsistenzüberprüfung festgestellten Abweichungen Hinweise darauf ermöglichen, welches der Normalspektralradiometer 1' betroffen ist. Damit lässt sich der Prozess vorübergehend mit den zwei nicht betroffenen Normalspektralradiometern 1' weiterführen. Die Normalspektralradiometer 1' können gleichen Typs, d.h. gleicher Bauart, oder unterschiedlichen Typs sein. Die Verwendung von Normalspektralradiometern 1' unterschiedlichen Typs hat den Vorteil, dass auch systematische Abweichungen (z.B. aufgrund von schwankender Temperatur oder Luftfeuchtigkeit) erkannt und eliminiert werden können, da Geräte unterschiedlichen Typs jeweils unterschiedlich auf Änderungen der Umgebungsbedingungen reagieren.

Die Normalspektralradiometer 1' werden bei der Feststellung von Abweichungen, spätestens jedoch nach Ablauf eines vorgegebenen Zeitintervalls auf Grundlage einer Standardlichtquelle 12 grundlegend neu kalibriert. Bei der Standardlichtquelle 12 kann es sich, wie oben erläutert, um eine oder einen Satz von mehreren Linienlampen in Kombination mit einer oder mehreren Halogenlampen mit wohldefiniertem Emissionsspektrum handeln. Die Kalibrierung der an den verschiedenen Standorten 9, 10, 11 befindlichen Normalspektralradiometer 1' erfolgt auf dieselbe Weise, d.h. auf Basis derselben Standardlichtquellen 12, die hierzu von Standort zu Standort 9, 10, 11 transportiert werden. Das Emissionsspektrum der Halogenlampenbasierten Standardlichtquelle 12 wird zyklisch in einem zertifizierten Labor 13, beispielsweise in einem nationalen Prüflabor, verifiziert bzw. kalibriert. Die Linienlampen benötigen keine Kalibrierung, da sie durch die Natur der atomaren Übergänge unveränderlich definiert sind und als physikalischer Standard unbeschränkte Gültigkeit haben. Auf diese Weise ist die Rückführbarkeit der Kalibrierung sämtlicher Spektralradiometer 1 auf einen einheitlichen (nationalen) Standard gewährleistet. Durch die erfindungsgemäße Kombination der lokalen Kalibriernormale mit der als Transfernormal dienenden Standardlichtquelle 12 ist der Gleichlauf sämtlicher Spektralradiometer 1 an den verschiedenen Standorten 9, 10, 11 sichergestellt.

Gemäß der Erfindung kann die Normallichtquelle 4 als lichtemittierendes Element 5 eine weißes Licht emittierenden Leuchtdiode aufweisen, die eine Strahlung eines ersten Wellenlängenbereichs (zum Beispiel im blauen Spektralbereich) emittierendes Halbleiterelement und wenigstens einen Leuchtstoff aufweist, der einen Teil der Strahlung des ersten Wellenlängenbereichs in Strahlung eines zweiten Wellenlängenbereichs (zum Beispiel im grünen/roten Spektralbereich) umwandelt. Das obere Diagramm der Figur 3 zeigt schematisch das Emissionsspektrum einer solchen Leuchtdiode in Form der wellenlängenabhängigen Intensität I(λ). Die durchgezogene Kurve zeigt das tatsächliche Emissionsspektrum der weißen Leuchtdiode. Zu erkennen ist ein Extremum im blauen Spektralbereich (links) sowie ein breiteres Extremum im grünen/roten Spektralbereich (rechts). Die gestrichelte Kurve gibt das mittels des zu kalibrierenden Spektralradiometers 1 gemessene Spektrum wieder. Zu erkennen ist, dass die Extrema relativ zueinander verschoben sind (angedeutet durch die vertikalen gestrichelten Linien im oberen Diagramm). Außerdem sind die relativen Intensitäten der Extrema gegenüber dem tatsächlichen Emissionsspektrum verschoben. Dies deutet darauf hin, dass das Spektrometer 2 des Spektralradiometers 1 hinsichtlich der Wellenlängenskala und auch hinsichtlich der Empfindlichkeit einer Korrektur, d.h. einer Kalibrierung bedarf. Hierzu wendet die Recheneinheit 3 des Spektralradiometers 1 einen Korrekturalgorithmus an, der in einem ersten Schritt eine Korrektur der Wellenlängenskala des Spektralradiometers 1 durchführt, in der Weise, dass die Lagen der spektralen Extrema des gemessenen Spektrums mit den Lagen der spektralen Extrema des bekannten Spektrums der Normallichtquelle 4 zur Übereinstimmung gebracht werden. Beispielsweise kann eine lineare Skalierung zum Einsatz kommen, die eine Verschiebung sowie eine Streckung/Stauchung der Wellenlängenskala bewirkt. In einem zweiten Schritt erfolgt eine wellenlängenabhängige Korrektur der spektralen Empfindlichkeit. Hierzu wird das gemessene Spektrum, d.h. der wellenlängenabhängige Intensitätsverlauf durch den bekannten wellenlängenabhängigen Intensitätsverlauf der Normallichtquelle 4 dividiert. Das Ergebnis ist im unteren Diagramm der Figur 3 angedeutet (durchgezogene Kurve). In dem Ergebnis der Division kann durch die Messung bedingtes Rauschen unerwünscht verstärkt sein. Um dies zu kompensieren, wird eine geeignete Kurve (zum Beispiel ein Polynom) an die sich durch die Division ergebende Kurve gepasst (gestrichelte Kurve im unteren Diagramm der Figur 3). Bei dieser Anpassung werden nur die Werte innerhalb des durch die beiden vertikalen, gestrichelten Linien im unteren Diagramm angedeuteten Intervalls berücksichtigt. Am außerhalb dieses Intervalls liegenden Rand des Spektrums sind die Werte aufgrund der geringen Intensität des gemessenen Spektrums nicht brauchbar. Schließlich korrigiert der Korrekturalgorithmus das gemessene Spektrum gemäß der angepassten Kurve, die dabei über den gesamten relevanten Spektralbereich extrapoliert wird. Der in dieser Weise angewandte Korrekturalgorithmus hat über den gesamten Spektralbereich Gültigkeit. Entsprechend werden auch die Ergebnisse, d.h. die photometrischen und/oder farbmetrischen Größen, die mittels der Recheneinheit 3 nach Anwendung des Korrekturalgorithmus bestimmt werden, automatisch richtig korrigiert.

## Patentansprüche

1. Verfahren zur Kalibrierung eines Spektralradiometers (1), mit den folgenden Verfahrensschritten:
- Aufnahme von Lichtmessdaten durch Vermessung der Strahlung wenigstens einer Normallichtquelle (4) mittels des zu kalibrierenden Spektralradiometers (1),
- Ableitung von Kalibrierdaten aus den Lichtmessdaten durch Vergleich der aufgenommenen Lichtmessdaten mit bekannten Daten der Normallichtquelle (4), und
- Kalibrierung des Spektralradiometers (1) gemäß den Kalibrierdaten, wobei
- die Normallichtquelle (4) spätestens nach Ablauf eines vorgegebenen Zeitintervalls auf Grundlage einer oder mehrerer Standardlichtquellen (12) kalibriert wird,
**dadurch gekennzeichnet, dass** die Gültigkeit, d.h. die Verwendbarkeit der Normallichtquelle (4) für die Kalibrierung überprüft wird, indem
- die Lichtmessdaten der Normallichtquelle (4) mit Lichtmessdaten einer oder mehrerer weiterer Normallichtquellen (4) gleichen Typs verglichen werden, wobei die Gültigkeit der Normallichtquelle (4) festgestellt wird, falls die Abweichungen der Lichtmessdaten der Normallichtquellen (4) voneinander unterhalb vorgegebener Grenzwerte liegen, und wobei anderenfalls die Kalibrierung der Normallichtquelle (4) früher, d.h. vor Ablauf des vorgegebenen Zeitintervalls erfolgt.

2. Verfahren nach Anspruch 1, **dadurch gekennzeichnet, dass** eine Mehrzahl von an einem Standort (9, 10, 11) befindlicher Spektralradiometer (1) auf dieselbe Weise, d.h. unter Verwendung derselben Normallichtquellen (4) kalibriert werden.

3. Verfahren nach den Ansprüchen 1 und 2, **dadurch gekennzeichnet, dass** an verschiedenen Standorten (9, 10, 11) befindliche Normallichtquellen (4) auf dieselbe Weise, d.h. auf Basis derselben Standardlichtquelle(n) (12) kalibriert werden.

4. Verfahren zur Kalibrierung eines Spektralradiometers (1) nach einem der Ansprüche 1 bis 3, **dadurch gekennzeichnet, dass** die Normallichtquelle (4) eine weißes Licht emittierende Leuchtdiode (5) umfasst, die ein Strahlung eines ersten Wellenlängenbereichs emittierendes Halbleiterelement und wenigstens einen Leuchtstoff aufweist, der einen Teil der Strahlung des ersten Wellenlängenbereichs in Strahlung eines zweiten Wellenlängenbereichs umwandelt.

5. Verfahren nach Anspruch 4, **dadurch gekennzeichnet, dass** die Kalibrierung die Korrektur der Wellenlängenskala des Spektralradiometers (1) umfasst, in der Weise, dass die Lagen von spektralen Extrema des gemessenen Spektrum mit den Lagen von spektralen Extrema des bekannten Spektrums der Normallichtquelle (4) im Wesentlichen in Übereinstimmung gebracht werden.

6. Verfahren nach Anspruch 4 oder 5, **dadurch gekennzeichnet, dass** die Kalibrierung eine wellenlängenabhängige Korrektur der spektralen Empfindlichkeit umfasst, in der Weise, dass der wellenlängenabhängige Intensitätsverlauf des korrigierten gemessenen Spektrums mit demjenigen des bekannten Spektrums der Normallichtquelle (4) im Wesentlichen in Übereinstimmung gebracht wird.

7. Verfahren nach einem der Ansprüche 4 bis 6, **dadurch gekennzeichnet, dass** die Normallichtquelle (4) eine Regeleinrichtung (6) umfasst, die die Betriebsparameter der Leuchtdiode (5), insbesondere den Stromfluss durch das Halbleiterelement und die Temperatur des Halbleiterelementes, regelt.

## Claims

1. Method for calibrating a spectroradiometer (1), comprising the following method steps:
- recording light measurement data by measuring the radiation from at least one standard light source (4) by means of the spectroradiometer (1) to be calibrated,
- deriving calibration data from the light measurement data by comparing the recorded light measurement data with known data of the standard light source (4), and
- calibrating the spectroradiometer (1) in accordance with the calibration data, wherein
- the standard light source (4) is calibrated on the basis of one or more industry-standard light sources (12), at the latest after expiry of a predetermined time interval,
**characterised in that** the validity, i.e. the usability, of the standard light source (4) for the calibration is checked by virtue of
- the light measurement data of the standard light source (4) being compared to light measurement data of one or more further standard light sources (4) of the same type, wherein the validity of the standard light source (4) is determined if the deviations of the light measurement data of the standard light sources (4) from one another lie below predetermined thresholds, and wherein otherwise the standard light source (4) is calibrated earlier, i.e. before expiry of the predetermined time interval.

2. Method according to claim 1, **characterised in that** a plurality of spectroradiometers (1) situated at one location (9, 10, 11) are calibrated in the same way, i.e. using the same standard light sources (4).

3. Method according to claims 1 and 2, **characterised in that** standard light sources (4) situated at different locations (9, 10, 11) are calibrated in the same way, i.e. on the basis of the same industry-standard light source(s) (12).

4. Method for calibrating a spectroradiometer (1) according to one of claims 1 to 3, **characterised in that** the standard light source (4) comprises a white-light-emitting light-emitting diode (5) which comprises a semiconductor element emitting radiation in a first wavelength range and at least one phosphor which converts part of the radiation in the first wavelength range into radiation in a second wavelength range.

5. Method according to claim 4, **characterised in that** the calibration comprises correcting the wavelength scale of the spectroradiometer (1) in such a way that the positions of spectral extrema of the measured spectrum substantially correlate with the positions of spectral extrema of the known spectrum of the standard light source (4).

6. Method according to claim 4 or 5, **characterised in that** the calibration comprises correcting the spectral sensitivity in a wavelength-dependent manner in such a way that the wavelength-dependent intensity curve of the corrected measured spectrum substantially correlates with that of the known spectrum of the standard light source (4).

7. Method according to one of claims 4 to 6, **characterised in that** the standard light source (4) comprises a control device (6) which regulates the operating parameters of the light-emitting diode (5), in particular the current flow through the semiconductor element and the temperature of the semiconductor element.

## Revendications

1. Procédé d'étalonnage d'un spectroradiomètre (1), comprenant les étapes de procédé suivantes :
- l'enregistrement de données de mesure de lumière par mesure du rayonnement d'au moins une source de lumière normale (4) au moyen du spectroradiomètre (1) à étalonner,
- la déduction de données d'étalonnage à partir des données de mesure de lumière par comparaison des données de mesure de lumière enregistrées à des données connues de la source de lumière normale (4), et
- l'étalonnage du spectroradiomètre (1) selon les données d'étalonnage,
- la source de lumière normale (4) étant étalonnée au plus tard après l'écoulement d'un intervalle de temps prédéfini sur la base d'une ou de plusieurs sources de lumière standard (12),
**caractérisé en ce que** la validité, c.-à-d. la possibilité d'utilisation de la source de lumière normale (4) pour l'étalonnage est vérifiée par le fait que
- les données de mesure de lumière de la source de lumière normale (4) sont comparées à des données de mesure de lumière d'une ou de plusieurs autres sources de lumière normale (4) du même type, la validité de la source de lumière normale (4) étant établie si les écarts des données de mesure de lumière des sources de lumière normale (4) les unes par rapport aux autres sont inférieurs à des valeurs limites prédéfinies, et l'étalonnage de la source de lumière normale (4) est sinon effectué plus tôt, c.-à-d. avant l'écoulement de l'intervalle de temps prédéfini.

2. Procédé selon la revendication 1, **caractérisé en ce qu'**une pluralité de spectroradiomètres (1) se trouvant à un endroit (9, 10, 11) sont étalonnés de la même manière, c.-à-d. en utilisant les mêmes sources de lumière normale (4).

3. Procédé selon les revendications 1 et 2, **caractérisé en ce que** des sources de lumière normales (4) se trouvant à différents endroits (9, 10, 11) sont étalonnées de la même manière, c.-à-d. sur la base de la ou des mêmes sources de lumière standard (12).

4. Procédé d'étalonnage d'un spectroradiomètre (1) selon l'une quelconque des revendications 1 à 3, **caractérisé en ce que** la source de lumière normale (4) comprend une diode électroluminescente (5) émettant de la lumière blanche, qui présente un élément semi-conducteur émettant un rayonnement d'une première plage de longueurs d'onde et au moins une substance luminescente, qui convertit une partie du rayonnement de la première plage de longueurs d'onde en un rayonnement d'une deuxième plage de longueurs d'onde.

5. Procédé selon la revendication 4, **caractérisé en ce que** l'étalonnage comprend la correction de l'échelle de longueurs d'onde du spectroradiomètre (1), de manière à faire essentiellement coïncider les positions des extrêmes spectraux du spectre mesuré avec les positions des extrêmes spectraux du spectre connu de la source de lumière normale (4).

6. Procédé selon la revendication 4 ou 5, **caractérisé en ce que** l'étalonnage comprend une correction dépendante de la longueur d'onde de la sensibilité spectrale, de manière à faire essentiellement coïncider la courbe d'intensité dépendante de la longueur d'onde du spectre mesuré corrigé avec celle du spectre connu de la source de lumière normale (4).

7. Procédé selon l'une quelconque des revendications 4 à 6, **caractérisé en ce que** la source de lumière normale (4) comprend un appareil de régulation (6), qui régule les paramètres d'exploitation de la diode électroluminescente (5), en particulier le flux de courant à travers l'élément semi-conducteur et la température de l'élément sem i-conducteur.
